# EUROPEAN PATENT APPLICATION

(11) **EP 4 753 298 A1**
(43) Date of publication of application: **03.06.2026**
(21) Application number: 24845927.3
(22) Date of filing: 18.07.2024
(51) Int. Cl.: H04W 4/38, H04W 8/22, H04L 67/10, H04W 24/10, H04W 4/70

(54) **METHOD AND APPARATUS FOR CONFIGURING SENSING GROUP IN WIRELESS COMMUNICATION SYSTEM**

(30) Priority: 24.07.2023 US 202363528424 P
(71) Applicant: LG Electronics Inc., Yeongdeungpo-gu Seoul 07336 (KR)
(72) Inventor: NOH, Yujin, Seoul 06772 (KR); LEE, Ki-Dong, Seoul 06772 (KR)
(74) Representative: Mooser, Sebastian Thomas
(86) International application number: PCT/KR2024/010369
(87) International publication number: WO 2025/023625

(57) **Abstract**

The present disclosure relates to a method, performed by a first device, for configuring a sensing group in a wireless communication system. The method may comprise the steps of: receiving a capability information request from a second device; transmitting capability information of the first device to the second device; receiving control information or configuration information from the second device; and configuring at least one sensing group for a sensing service on the basis of the control information or the configuration information.

## Description

### TECHNICAL FIELD

The following description relates to a wireless communication system, and more particularly, to a device and a method for configuring a sensing group in a wireless communication system.

### BACKGROUND ART

Wireless access systems have been widely deployed to provide various types of communication services such as voice or data. In general, a wireless access system is a multiple access system that supports communication of multiple users by sharing available system resources (a bandwidth, transmission power, etc.) among them. For example, multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, and a Single Carrier Frequency Division Multiple Access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

### DISCLOSURE

### TECHNICAL PROBLEM

The present disclosure relates to a device and a method for configuring a sensing group in a wireless communication system.

The present disclosure relates to a device and a method for pre-configuring a plurality of sensing groups in a wireless communication system.

The present disclosure relates to a device and a method for dynamically reconfiguring a sensing group in a wireless communication system.

The present disclosure relates to a device and a method for selecting at least one sensing group for a sensing service among pre-configured sensing groups in a wireless communication system.

The present disclosure relates to a device and a method for selecting at least one sensing group based on exposure information of sensing groups in a wireless communication system.

The present disclosure relates to a device and a method for selecting at least one sensing group satisfying a specified condition in a wireless communication system.

The present disclosure relates to a device and a method for participating in at least one selected sensing group in a wireless communication system.

The present disclosure relates to a device and a method for indicating a start of a sensing measurement process to members within at least one selected sensing group in a wireless communication system.

The present disclosure relates to a device and a method for determining whether to terminate a sensing group based on the number of respondents that have reported sensing measurement data in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### TECHNICAL SOLUTION

In one example of the present disclosure, a method performed by a first device in a wireless communication system may comprise: receiving, from a second device, a request for capability information; transmitting, to the second device, the capability information of the first device; receiving, from the second device, control information or configuration information; and configuring at least one sensing group for a sensing service, based on the control information or the configuration information, wherein the control information or the configuration information may include sensing-related information for the at least one sensing group among a plurality of sensing groups preconfigured.

In one example of the present disclosure, a method performed by a second device in a wireless communication system may comprise: transmitting, to a first device, a request for capability information; receiving the capability information of the first device; and transmitting, to the first device, control information or configuration information generated based on the capability information, wherein the control information or the configuration information may include sensing-related information for the at least one sensing group among a plurality of sensing groups preconfigured.

In one example of the present disclosure, a method performed by a first device in a wireless communication system may comprise a transceiver and a processor connected to the transceiver, wherein the processor may control to: receive, from other device, a request for capability information; transmit, to the other device, the capability information; receive, from the other device, control information or configuration information; and configure at least one sensing group for a sensing service, based on the control information or the configuration information, wherein the control information or the configuration information may include sensing-related information for the at least one sensing group among a plurality of sensing groups preconfigured.

In one example of the present disclosure, a method performed by a second device in a wireless communication system may comprise a transceiver and a processor connected to the transceiver, wherein the processor may control to: transmit, to a first device, a request for capability information; receive the capability information of the first device; and transmit, to the first device, control information or configuration information generated based on the capability information, wherein the control information or the configuration information may include sensing-related information for the at least one sensing group among a plurality of sensing groups preconfigured.

In one example of the present disclosure, a communication device may comprise at least one processor, and at least one computer memory connected to the at least one processor and storing instructions that direct operations when executed by the at least one processor, the operations comprising: receiving, from other device, a request for capability information; transmitting, to the other device, the capability information; receiving, from the other device, control information or configuration information; and configuring at least one sensing group for a sensing service, based on the control information or the configuration information, wherein the control information or the configuration information may include sensing-related information for the at least one sensing group among a plurality of sensing groups preconfigured.

In one example of the present disclosure, a non-transitory computer-readable medium storing at least one instruction may comprise the at least one instruction executable by a processor, wherein the at least one instruction causing a device, the processor, to: receive, from other device, a request for capability information; transmit, to the other device, the capability information; receive, from the other device, control information or configuration information; and configure at least one sensing group for a sensing service, based on the control information or the configuration information, wherein the control information or the configuration information may include sensing-related information for the at least one sensing group among a plurality of sensing groups preconfigured.

### ADVANTAGEOUS EFFECTS

According to embodiments based on the present disclosure, the following effects may be obtained.

The present disclosure may configure a sensing group simply and efficiently in a wireless communication system.

Effects obtained in the present disclosure are not limited to the above-mentioned effects, and other effects not mentioned above may be clearly derived and understood by those skilled in the art, to which a technical configuration of the present disclosure is applied, from the following description of embodiments of the present disclosure. That is, effects, which are not intended when implementing a configuration described in the present disclosure, may also be derived by those skilled in the art from the embodiments of the present disclosure.

### BRIEF DESCRIPTION OF THE DRAWINGS

FIG. 1 is a view showing an example of a communication system applicable to the present disclosure.
FIG. 2 is a view showing an example of a UE to which the implementation of the present disclosure is applied.
FIG. 3 illustrates a functional division between a next generation radio access network (NG-RAN) and a 5th generation core (5GC) applicable to the present disclosure.
FIG. 4 illustrates an example of a general architecture of a 5th generation (5G) system applicable to the present disclosure.
FIG. 5 illustrates an example of a sensing measurement process according to roles of devices applicable to the present disclosure.
FIG. 6 illustrates another example of a sensing measurement process according to roles of devices applicable to the present disclosure.
FIG. 7 illustrates an example of steps of a sensing measurement procedure applicable to the present disclosure.
FIG. 8 illustrates an example of a procedure for generating and reporting sensing measurement data based on a sensing measurement configuration applicable to the present disclosure.
FIG. 9 illustrates an example of a sensing group set according to one embodiment of the present disclosure.
FIG. 10 illustrates another example of a sensing group set according to one embodiment of the present disclosure.
FIG. 11 illustrates another example of a sensing group set according to one embodiment of the present disclosure.
FIG. 12 illustrates another example of a sensing group set according to one embodiment of the present disclosure.
FIG. 13 illustrates an example of sensing group configuration according to one embodiment of the present disclosure.
FIG. 14 illustrates another example of sensing group configuration according to one embodiment of the present disclosure.
FIG. 15 illustrates another example of sensing group configuration according to one embodiment of the present disclosure.
FIG. 16 illustrates another example of sensing group configuration according to one embodiment of the present disclosure.
FIG. 17 illustrates an example of a procedure for receiving information for sensing measurement according to one embodiment of the present disclosure.
FIG. 18 illustrates an example of a procedure for transmitting information for sensing measurement according to one embodiment of the present disclosure.
FIG. 19 illustrates an example of a sensing group configuration procedure according to one embodiment of the present disclosure.

### MODE FOR INVENTION

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an advanced base station (ABS), an access point, etc.

In the embodiments of the present disclosure, the term terminal may be replaced with a UE, a mobile station (MS), a subscriber station (SS), a mobile subscriber station (MSS), a mobile terminal, an advanced mobile station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

For background arts, terms, abbreviations, etc. used in the present disclosure, refer to matters described in the standard documents published prior to the present disclosure. For example, reference may be made to the standard documents 36.xxx and 38.xxx.

With respect to terms, abbreviations, and other background technologies that may be used in the present document, reference may be made to the standard documents listed below that were disclosed prior to the present document. In particular, terms, abbreviations, and other background technologies related to LTE/Evolved Packet System (EPS) may refer to the 36.xxx series, the 23.xxx series, and the 24.xxx series, and terms, abbreviations, and other background technologies related to NR (new radio)/5GS may refer to the 38.xxx series, the 23.xxx series, and the 24.xxx series.

Hereinafter, the present specification is described based on the terms defined as described above.

Three main requirement areas of 5G include (1) an enhanced Mobile Broadband (eMBB) area, (2) a massive Machine Type Communication (mMTC) area, and (3) an Ultra-reliable and Low Latency Communications (URLLC) area.

Some use cases may require multiple areas for optimization, and other use cases may focus on only one Key Performance Indicator (KPI). 5G supports such various use cases in a flexible and reliable manner.

### Communication System Applicable to the Present Disclosure

Without being limited thereto, various descriptions, functions, procedures, proposals, methods and/or operational flowcharts of the present disclosure disclosed herein are applicable to various fields requiring wireless communication/connection (e.g., 5G).

Hereinafter, a more detailed description will be given with reference to the drawings. In the following drawings/description, the same reference numerals may exemplify the same or corresponding hardware blocks, software blocks or functional blocks unless indicated otherwise.

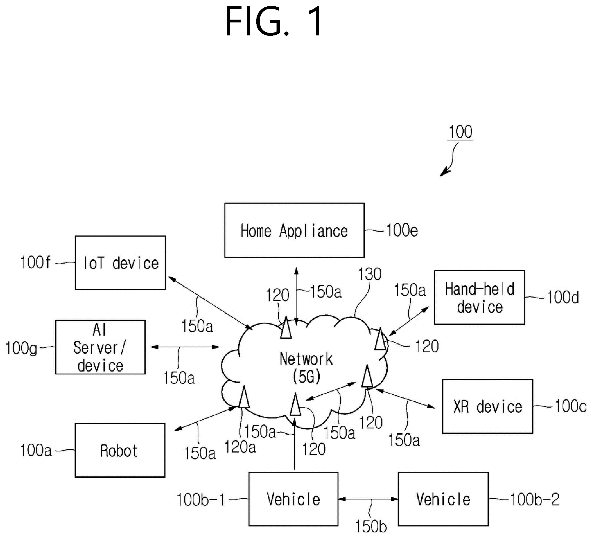

FIG. 1 is a view showing an example of a communication system applicable to the present disclosure.

Referring to FIG. 1, the communication system 100 applicable to the present disclosure includes a wireless device, a base station and a network. The wireless device refers to a device for performing communication using radio access technology (e.g., 5G NR or LTE) and may be referred to as a communication/wireless/5G device. Without being limited thereto, the wireless device may include a robot 100 a, vehicles 100 b-1 and 100 b-2, an extended reality (XR) device 100 c, a hand-held device 100 d, a home appliance 100 e, an Internet of Thing (IoT) device 100 f, and an artificial intelligence (AI) device/server 100 g. For example, the vehicles may include a vehicle having a wireless communication function, an autonomous vehicle, a vehicle capable of performing vehicle-to-vehicle communication, etc. The vehicles 100 b-1 and 100 b-2 may include an unmanned aerial vehicle (UAV) (e.g., a drone). The XR device 100 c includes an augmented reality (AR)/virtual reality (VR)/mixed reality (MR) device and may be implemented in the form of a head-mounted device (HMD), a head-up display (HUD) provided in a vehicle, a television, a smartphone, a computer, a wearable device, a home appliance, a digital signage, a vehicle or a robot. The hand-held device 100 d may include a smartphone, a smart pad, a wearable device (e.g., a smart watch or smart glasses), a computer (e.g., a laptop), etc. The home appliance 100 e may include a TV, a refrigerator, a washing machine, etc. The IoT device 100 f may include a sensor, a smart meter, etc. For example, the base station 120 and the network 130 may be implemented by a wireless device, and a specific wireless device 120 a may operate as a base station/network node for another wireless device.

The wireless devices 100 a to 100 f may be connected to the network 130 through the base station 120. AI technology is applicable to the wireless devices 100 a to 100 f, and the wireless devices 100 a to 100 f may be connected to the AI server 100 g through the network 130. The network 130 may be configured using a 3G network, a 4G (e.g., LTE) network or a 5G (e.g., NR) network, etc. The wireless devices 100 a to 100 f may communicate with each other through the base station 120/the network 130 or perform direct communication (e.g., sidelink communication) without through the base station 120/the network 130. For example, the vehicles 100 b-1 and 100 b-2 may perform direct communication (e.g., vehicle to vehicle (V2V)/vehicle to everything (V2X) communication). In addition, the IoT device 100 f (e.g., a sensor) may perform direct communication with another IoT device (e.g., a sensor) or the other wireless devices 100 a to 100 f.

Wireless communications/ connections 150 a, 150 b and 150 c may be established between the wireless devices 100 a to 100 f/the base station 120 and the base station 120/the base station 120. Here, wireless communication/connection may be established through various radio access technologies (e.g., 5G NR) such as uplink/downlink communication 150 a, sidelink communication 150 b (or D2D communication) or communication 150 c between base stations (e.g., relay, integrated access backhaul (IAB). The wireless device and the base station/wireless device or the base station and the base station may transmit/receive radio signals to/from each other through wireless communication/ connection 150 a, 150 b and 150 c. For example, wireless communication/ connection 150 a, 150 b and 150 c may enable signal transmission/reception through various physical channels. To this end, based on the various proposals of the present disclosure, at least some of various configuration information setting processes for transmission/reception of radio signals, various signal processing procedures (e.g., channel encoding/decoding, modulation/demodulation, resource mapping/demapping, etc.). resource allocation processes, etc. may be performed.

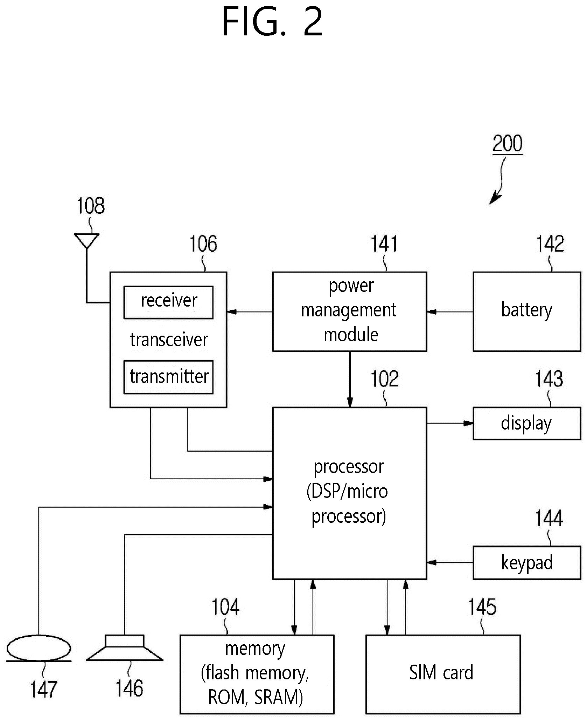

FIG. 2 is a view showing an example of a UE to which the implementation of the present disclosure is applied.

Referring to FIG. 2, a UE 200 may include a processor 202, a memory 204, a transceiver 206, one or more antennas 208, a power management module 241, a battery 242, a display 243, a keypad 244, a subscriber identification module (SIM) card 245, a speaker 246, and a microphone 247.

The processor 202 may be configured to implement a description, a function, a procedure, a proposal, a method and/or an operating flowchart disclosed in the present specification. The processor 202 may be configured to control one or more different components of the UE 200 to implement a description, a function, a procedure, a proposal, a method and/or an operating flowchart disclosed in the present specification. A layer of a wireless interface protocol may be embodied in the processor 202. The processor 202 may include an ASIC, other chipsets, a logic circuit and/or a data processing device. The processor 202 may be an application processor. The processor 202 may include at least one of a DSP, a central processing unit (CPU), a graphics processing unit (GPU), and a modem (modulator and demodulator).

The memory 204 may be coupled operably with the processor 202 and store various information for operating the processor 202. The memory 204 may include a ROM, a RAM, a flash memory, a memory card, a storage medium and/or another storage device. In case of implementation in software, a technology described herein may be implemented using a module (e.g., a procedure, a function, and the like) executing a description, a function, a procedure, a proposal, a method and/or an operating flowchart disclosed in the present specification. The module may be stored in the memory 204 and be executed by the processor 202. The memory 204 may be embodied in the processor 202 or outside the processor 202 in which case the memory 204 may be communicatively coupled with the processor 202 through various methods known in technology.

The transceiver 206 may be operably coupled with the processor 202 and transmit and/or receive a radio signal. The transceiver 206 may include a transmitter and a receiver. The transceiver 206 may include a baseband circuit for processing a radio frequency signal. The transceiver 206 may transmit and/or receive a radio signal by controlling the one or more antennas 208.

The power management module 241 may manage the power of the processor 202 and/or the transceiver 206. The battery 242 may supply power to the power management module 241.

The display 243 may output a result processed by the processor 202. The keypad 244 may receive an input to be used in the processor 202. The keypad 244 may be displayed on the display 243.

The SIM card 245 is an integrated circuit for safely storing an international mobile subscriber identity (IMSI) and a relevant key and may be used to identify and authenticate a subscriber in a hand-held telephone device like a mobile phone or a computer. In addition, contact information may be stored in many SIM cards.

The speaker 246 may output a sounded-related result processed in the processor 202. The microphone 247 may receive a sounded-related input to be used in the processor 202.

In an implement of the present specification, a UE may operate as a transmitting device in an uplink and a receiving device in a downlink. In an implement of the present specification, a base station may operate as a receiving device in a UL and a transmitting device in a DL. In the present specification, a base station may be referred to as a node B (Node B), an eNode B (eNB), and a gNB and may not be limited to a specific form.

In addition, as an example, a UE may be embodied in various forms according to a use example/service. A UE may be configured by various components, devices/parts and/or modules. For example, each UE may include a communication device, a control device, a memory device, and an addition component. A communication device may a communication circuit and a transceiver. For example, a communication circuit may include one or more processors and/or one or more memories. For example, a transceiver may include one or more transceivers and/or one or more antennas. A control device may be electrically coupled with a communication device, a memory device and an additional component and control an overall operation of each UE. For example, a control device may control an electric/mechanical operation of each UE based on a program/a code/an instruction/information stored in a memory device. A control device may transmit information stored in a memory device to the outside (e.g., another communication device) via a communication device through a wireless/wired interface or store information received from the outside (e.g., another communication device) through the wireless/wired interface in the memory device.

An additional component may be configured in various ways according to a type of a UE. For example, an additional component may include at least one of a power device/battery, an input/output (I/O) device (e.g., an audio I/O port, a video I/O port), a driving device, and a computing device. In addition, without being limited thereto, a UE may be embodied in forms of the robot 100a of FIG. 1, the vehicles 100b-1 and 100b-2 of FIG. 1, the XR device 100c of FIG. 1, the hand-held device 100d of FIG. 1, the home appliance 100e of FIG. 1, the IoT device 100f of FIG. 1, a digital broadcast terminal, a hologram device, a public safety device, an MTC device, a medical device, a fintech device (or financial device), a security device, a climate/environment device, the AI server/device 100g of FIG. 1, the base station 120 of FIG. 1, and a network node. A UE may be used a mobile or fixed place according to a use example/service.

Various components, devices/parts and/or all the modules of a UE may be connected to each other through a wired interface, or at least a part thereof may be wirelessly connected through a communication device. In addition, each component, a device/a part and/or a module of a UE may further include one or more components. For example, a control device may be configured by a set of one or more processors. As an example, a control device may be configured by a set of a communication control processor, an application processor (AP), an electronic control unit (ECU), a GPU, and a memory control processor. As anther example, a memory device may be configured by a RAM, a dynamic RAM (DRAM), a ROM, a flash memory, a volatile memory, a non-volatile memory, and/or a combination thereof.

### 5G System Architecture to which the Present Disclosure is Applicable

A 5G system is an advanced technology from 4G LTE mobile communication technology and supports a new radio access technology (RAT), extended long term evolution (eLTE) as an extended technology of LTE, non-3GPP access (e.g., wireless local area network (WLAN) access), etc. through the evolution of the existing mobile communication network structure or a clean-state structure.

The 5G system is defined based on a service, and an interaction between network functions (NFs) in an architecture for the 5G system can be represented in two ways as follows.

Reference point representation: indicates an interaction between NF services in NFs described by a point-to-point reference point (e.g., N11) between two NFs (e.g., AMF and SMF).

Service-based representation: network functions (e.g., AMF) within a control plane (CP) allow other authenticated network functions to access its services. The representation also includes a point-to-point reference point, if necessary.

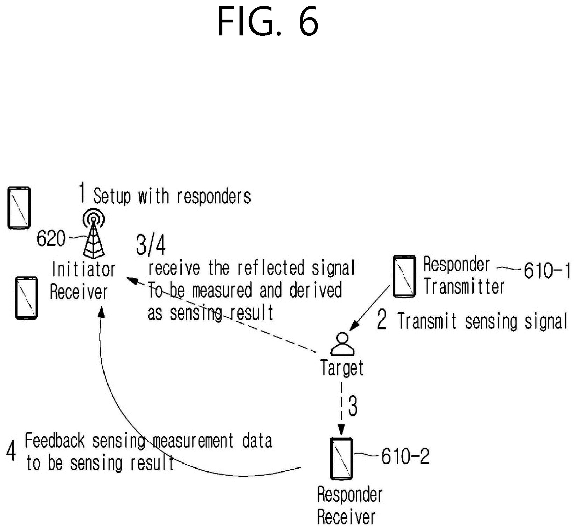

5G Core (5GC) may include various components, part of which are shown in FIG. 6, including an access and mobility management function (AMF), a session management function (SMF), a policy control function (PCF), a Prose user plane function (UPF), an application function (AF), unified data management (UDM), and a non-3GPP interworking function (N3IWF).

A UE is connected to a data network via the UPF through a next generation radio access network (NG-RAN) including the gNB. The UE may be provided with a data service even through untrusted non-3GPP access, e.g., a wireless local area network (WLAN). In order to connect the non-3GPP access to a core network, the N3IWF may be deployed.

The N3IWF performs a function of managing interworking between the non-3GPP access and the 5G system. When the UE is connected to non-3GPP access (e.g., WiFi referred to as IEEE 801.11), the UE may be connected to the 5G system through the N3IWF. The N3IWF performs control signaling with the AMF and is connected to the UPF through an N3 interface for data transmission.

The AMF may manage access and mobility in the 5G system. The AMF may perform a function of managing (non-access stratum) NAS security. The AMF may perform a function of handling mobility in an idle state.

The UPF performs a function of gateway for transmitting and receiving user data. The UPF node 440 may perform the entirety or a portion of a user plane function of a serving gateway (S-GW) and a packet data network gateway (P-GW) of 4G mobile communication.

The UPF is a component that operates as a boundary point between a next generation radio access network (NG-RAN) and the core network and maintains a data path between the gNB and the SMF. In addition, when the UE moves over an area served by the gNB, the UPF serves as a mobility anchor point. The UPF may perform a function of handling a PDU. For mobility within the NG-RAN (which is defined after 3GPP Release-15), the UPF may route packets. In addition, the UPF may also serve as an anchor point for mobility with another 3GPP network (RAN defined before 3GPP Release-15, e.g., universal mobile telecommunications system (UMTS) terrestrial radio access network (UTRAN), evolved (E)-UTRAN or global system for mobile communication (GERAN)/enhanced data rates for global evolution (EDGE) RAN. The UPF may correspond to a termination point of a data interface toward the data network.

The PCF is a node that controls an operator's policy. The AF is a server for providing various services to the UE. The UDM is a server that manages subscriber information, such as home subscriber server (HSS) of 4G mobile communication. The UDM stores and manages the subscriber information in a unified data repository (UDR).

The SMF may perform a function of allocating an Internet protocol (IP) address of the UE. In addition, the SMF may control a packet data unit (PDU) session.

For convenience of explanation, hereinafter, reference numerals may be omitted for AMF, SMF, PCF, UPF, AF, UDM, N3IWF, gNB, or UE, which may operate with reference to contents described in standard documents released earlier than the present document.

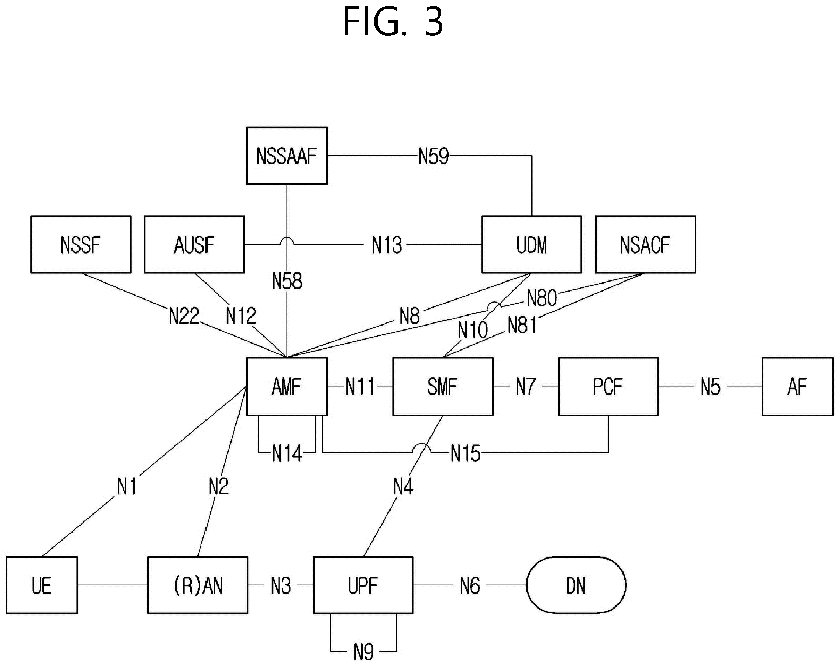

FIG. 3 illustrates an example of functional separation of an NG-RAN and a 5th generation core (5GC) applicable to the present disclosure.

Referring to FIG. 3, a UE is connected to a data network (DN) through a next generation RAN. A control plane function (CPF) node performs all or a part of the functions of a mobility management entity (MME) of 4G mobile communication and all or a part of serving gateway (S-GW) and PDN gateway (P-GW) functions. The CPF node includes AMF and SMF.

A UPF node performs a function of a gateway in which data of a user is transmitted and received.

An authentication server function (AUSF) authenticates and manages a UE. A network slice selection function (NSSF) is a node for network slicing described below.

A network exposure function (NEF) provides a mechanism that safely opens the service and function of 5G core.

Reference points in FIG. 3 are described as follows. N1 represents a reference point between UE and AMF. N2 represents a reference point between (R)AN and AMF. N3 represents a reference point between (R)AN and UPF. N4 represents a reference point between SMF and UPF. N5 represents a reference point between PCF and AF. N6 represents a reference point between UPF and DN. N7 represents a reference point between SMF and PCF. N8 represents a reference point between UDM and AMF. N9 represents a reference point between UPFs. N10 represents a reference point between UDM and SMF. N11 represents a reference point betweenAMF and SMF. N12 represents a reference point betweenAMF and AUSF. N13 represents a reference point between UDM and AUSF. N14 represents a reference point between AMFs. N15 represents a reference point between PCF and AMF in a non-roaming scenario and a reference point between AMF and PCF of a visited network in a roaming scenario. N16 represents a reference point between SMFs. N22 represents a reference point betweenAMF and NSSF. N30 represents a reference point between PCF and NEF. N33 may represent a reference point between AF and NEF, and the above-described entity and interface may be configured with reference to contents described in standard documents released earlier than the present document.

A radio interface protocol is based on the 3GPP radio access network standard. The radio interface protocol is horizontally divided into a physical layer, a data link layer, and a network layer, and is vertically divided into a user plane for transmission of data information and a control plane for transmit of control signal (signaling).

The protocol layers may be divided into L1 (layer-1), L2 (layer-2), and L3 (layer-3) based on the three lower layers of the open system interconnection (OSI) reference model widely known in communication systems.

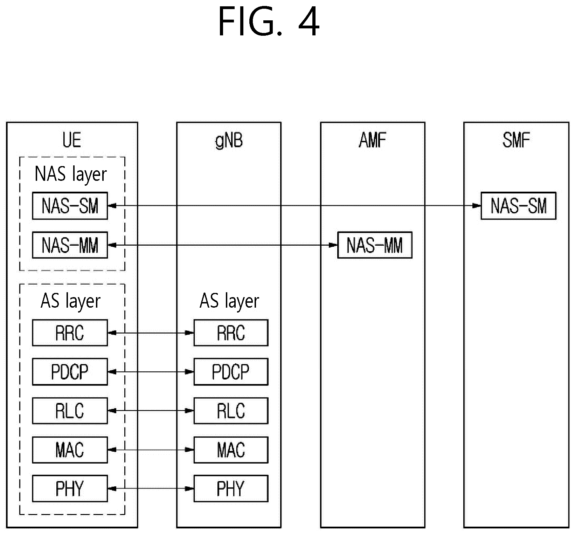

Hereinafter, the present disclosure describes each layer of a wireless protocol. FIG. 4 illustrates an example of a general architecture of a 5G (5th generation) system applicable to the present disclosure.

Referring to FIG. 4, an access stratum (AS) layer may include a physical (PHY) layer, a medium access control layer, a radio link control (RLC) layer, a packet data convergence protocol (PDCP) layer, and a radio resource control (RRC) layer, and an operation based on each layer may be performed with reference to contents described standard documents released earlier than the present document.

### Specific embodiments of the present disclosure

The present disclosure relates to a device and a method for dynamically configuring a sensing group in a wireless communication system. Specifically, the present disclosure relates to a method and a device for dynamically configuring a sensing group by a sensing initiator selecting at least one sensing group among sensing groups pre-configured in a network and joining the selected at least one sensing group.

Next-generation wireless communication is regarded as a key driving force for various emerging fields such as smart cities, industrial IoT, eHealth, automotive fields, public safety, and education. Sensing functions supporting applications in such emerging fields are considered to play an important role in satisfying the demand for high-quality services based on the accuracy of cases in which surrounding environments are perceived. Accordingly, it is natural that sensing-related functions, technologies, and capabilities are discussed in both cellular networks and WiFi networks.

Hereinafter, in the present disclosure, 5G wireless sensing may be defined as a 5GS function that provides a capability to obtain information on an environment using NR radio frequency (RF) signals and/or characteristics of objects within the environment (e.g., a shape, a size, a direction, a speed, a position, a distance of an object, or relative movement between objects), and, in some cases, to obtain pre-defined information available in EPC and/or E-UTRA. In addition, a sensing group may be defined as a set including at least one sensing transmitter and at least one sensing receiver whose locations are known and that may synchronously collect sensing data. A sensing result may mean processed 3GPP sensing data requested by a service consumer, and a sensing signal may mean a transmission signal on a 3GPP wireless interface used for sensing. These definitions refer to NR RF signals, and pre-defined information available in EPC and/or E-UTRA may be used within a range that does not affect EPC and/or E-UTRA.

The present disclosure describes a sensing measurement process for collecting sensing measurement data. The sensing measurement data means data collected based on radio/wireless signals that are affected by reflection, refraction, or diffraction by a target of interest or an environment for a sensing purpose. Hereinafter, the sensing measurement data may be used and/or interpreted as indicating 3GPP sensing data and/or non-3GPP sensing data. Information derived from the sensing measurement data means a sensing result. In addition, in order to clarify the sensing measurement process, four components, namely a sensing initiator, a sensing respondent, a sensing transmitter, and a sensing receiver, are defined as follows.
- Sensing initiator: A sensing initiator is an entity that starts a sensing measurement process, and may be a base station, a UE, or consumer premise equipment (CPE).
- Sensing responder: A sensing responder is an entity that participates in a sensing measurement process in response to a sensing initiator, and may be a base station, a UE, or CPE.
- Sensing transmitter: A sensing transmitter is an entity that transmits a sensing signal to be used for an operation of a sensing service, and may be an NR RAN node or a UE. The sensing transmitter may be the same entity as a sensing receiver or may be a different entity. In addition, the sensing transmitter may be a base station, a UE, or CPE that transmits a sensing signal to be measured in the sensing measurement process.
- Sensing receiver: A sensing receiver is an entity that receives a sensing signal to be used for an operation of a sensing service, and may be an RN RAN node or a UE. The sensing receiver may be the same entity as a sensing transmitter or may be a different entity. In addition, the sensing receiver may be a base station, a UE, or CPE that receives a sensing signal transmitted from a sensing transmitter and obtains sensing measurement data in the sensing measurement process.

In the present disclosure, each of a sensing initiator, a sensing responder, a sensing transmitter, and a sensing receiver may be referred to as an initiator, a responder, a transmitter, and a receiver, respectively.

A location or a service area for a sensing measurement process may include a target sensing service area and a moving target sensing service area. The target sensing service area means a Cartesian location area to be sensed by deriving characteristics of an environment and/or objects within the environment having a specific sensing service quality from wireless signals that have been affected by influences (e.g., refraction, reflection, diffraction). Here, the target sensing service area may include both indoor and outdoor environments. In addition, the moving target sensing service area means a target sensing service area that moves according to mobility of a target from a perspective of a sensing transmitter.

During a sensing measurement process, devices (e.g., a base station, a UE, or CPE) may perform roles of an initiator, a responder, a transmitter, and/or a receiver. A device, as a sensing initiator, may start a sensing measurement process through a downlink shared channel (DSCH), a physical downlink control channel (PDCCH), a physical uplink shared channel (PUSCH), a physical uplink control channel (PUCCH), or a sidelink shared channel (SL-SCH). A device that has started a sensing measurement process as a sensing initiator may operate as at least one of a sensing transmitter or a sensing receiver, or may not operate as either of the sensing transmitter and the sensing receiver. A device, as a sensing initiator, may access sensing measurement data and may transmit the sensing measurement data to a service provider or a service consumer through a network, or may directly derive a sensing result. A device, as a sensing responder, may participate in a sensing measurement process through a PDSCH, a PDCCH, a PUSCH, a PUCCH, or an SL-SCH, and may perform at least one of roles of a sensing transmitter or a sensing receiver. A device, as a sensing receiver, may access measurement data. A device, as a sensing transmitter, may transmit a sensing signal affected by an object of interest or an environment for sensing (e.g., a channel state information reference signal (CSI-RS), a CSI for interference management (CSI-IM), a demodulation reference signal (DM-RS), a phase tracking reference signal (PT-RS), or a sounding reference signal (SRS)). When permitted, a non-3GPP signal (e.g., a radar signal) may be used as a sensing signal. When high spectral efficiency is preferred during a sensing measurement process, OFDM, discrete fourier transform-spread-OFDM (DFT-S-OFDM), or a modification thereof may be used as a sensing signal. A device, as a sensing receiver, may receive an affected sensing signal and, when necessary, may report sensing measurement data (e.g., PDSCH, PUSCH, SL-SCH, etc.) to a sensing initiator. A device operating as a sensing receiver may access sensing measurement data. Based on a topology or a framework defined in 3GPP, a sensing initiator and a sensing transmitter may be the same device. Similarly, a sensing responder and a sensing receiver may be the same device.

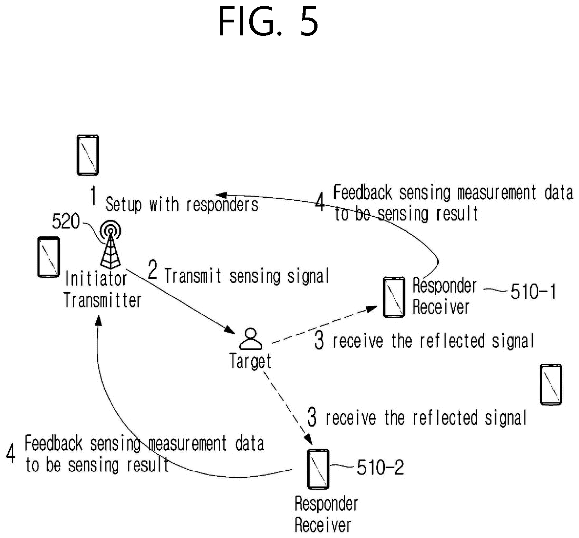

FIG. 5 illustrates an example of a sensing measurement process according to roles of devices applicable to the present disclosure, and FIG. 6 illustrates another example of a sensing measurement process according to roles of devices applicable to the present disclosure.

Referring to FIG. 5, a base station 520 operates as a sensing initiator and a sensing transmitter, and UEs 510-1, 510-2 operate as sensing responders and sensing receivers. In this case, the base station 520, as a sensing initiator, configures a sensing group with the UEs 510-1, 510-2 that are sensing responders, and, as a sensing transmitter, transmits a signal for sensing. Each of the UEs 510-1, 510-2, as a sensing receiver, receives a signal reflected by a target, and transmits sensing measurement data generated based on the received signal to the base station 520 as a sensing result.

Referring to FIG. 6, a base station 620 operates as a sensing initiator and a sensing receiver, a first UE 610-1 operates as a sensing responder and a sensing transmitter, and a second UE 610-2 operates as a sensing responder and a sensing receiver. In this case, the base station 620, as a sensing initiator, configures a sensing group with UEs 610-1 and 610-2 that are sensing responders. When the sensing group is configured, the first UE 610-1, as a sensing transmitter, transmits a signal for sensing. Each of the second UE 610-2 and the base station 620, as a sensing receiver, receives a signal reflected by a target. The base station 620 stores sensing measurement data generated based on the received signal as a sensing result, and the second UE 610-2 transmits sensing measurement data generated based on the received signal to the base station 620 as a sensing result.

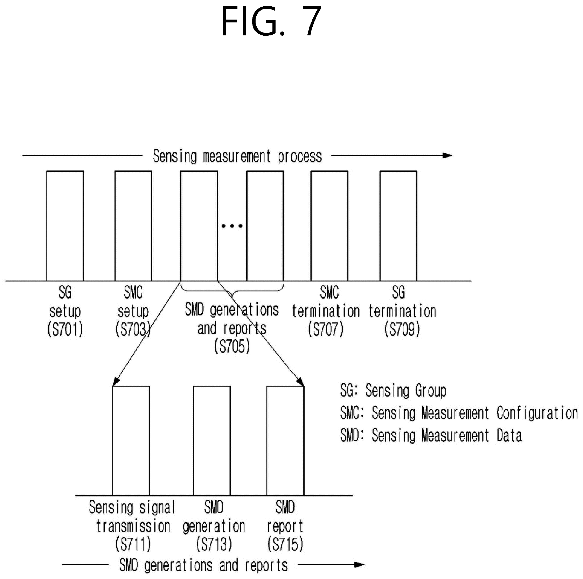

FIG. 7 illustrates an example of specific steps of a sensing measurement process applicable to the present disclosure. Referring to FIG. 7, the sensing measurement process may be composed of the following steps.

Sensing group (SG) setup stage S701: The sensing group configuration stage S701 is a stage in which a sensing initiator and a sensing responder form a sensing group, and, when necessary, an update for the sensing group may be performed. For example, when necessary, an existing sensing group may be changed.

Sensing measurement configuration (SMC) configuration stage S703: The sensing measurement configuration configuration stage S703 is a stage of configuring information necessary for sensing measurement of a sensing transmitter and/or a sensing receiver within the sensing group, and, when necessary, an update for the sensing measurement configuration may be performed.

Sensing measurement data (SMD) generation and reporting stage S705: The sensing measurement data generation and reporting stage S705 includes a sensing signal transmission stage S711 of a sensing transmitter, a sensing measurement data generation stage S713 of a sensing receiver, and a sensing measurement data reporting stage S715 of a sensing receiver.

Sensing measurement configuration termination stage S707: The sensing measurement configuration termination stage S707 is a stage in which the sensing measurement configuration is terminated after the sensing measurement is completed.

Sensing group termination stage S709: The sensing group termination stage S709 is a stage in which the sensing group is terminated after the sensing measurement configuration is terminated.

At least some of the steps of the sensing measurement process as described above may be repeatedly performed. For example, the sensing measurement data generation and reporting stage S705 may be repeatedly performed. As another example, the sensing group setup stage S701 and the sensing measurement configuration configuration stage S703 may be designed to be performed once. When necessary, at least one of a sensing group update or a sensing measurement configuration update may be repeatedly performed one or more times. For example, in order to update a sensing measurement configuration, the sensing measurement configuration configuration stage S703 may be repeatedly performed.

When different devices are in different modes (e.g., a sensing idle mode or a sensing active mode) with respect to a sensing initiator, the sensing initiator may consider two conditions before starting a sensing measurement process. In the present disclosure, each of an idle mode and an active mode may be understood as a sensing idle mode with respect to a sensing initiator and a sensing active mode with respect to a sensing initiator. A UE operating in an idle mode with respect to a sensing initiator A may operate in an active mode with respect to another sensing initiator.

According to various types of sensing measurement processes, during an idle mode of a sensing responder, each candidate responder or potential responder may perform periodic wake up and monitoring in order to check whether there is data to be received from a first sensing initiator. Alternatively, each candidate responder or potential responder may operate in a complete idle state with respect to the first sensing initiator so as not to expect reception of data from the first sensing initiator while monitoring, measuring, or receiving data from a second sensing initiator that has completed another sensing group setup. That is, a sensing responder may operate in an idle mode with respect to the first initiator, and may operate in an active mode with respect to a second initiator or a responder. While a candidate responder is in an active mode, a sensing initiator transmits information according to a pre-defined duration, and the information may be transferred through a control channel (e.g., physical downlink control channel (PDCCH), sidelink control channel (SLCCH)). In this case, when the information indicates that there is data to be received, the candidate responder participates in the sensing measurement process. Assuming that active links between a sensing initiator and a sensing responder are already configured, the sensing initiator may obtain information corresponding to link quality, such as interference information based on channel state information reference signal (CSI-RS) and CSI for interference management (CSI-IM), and channel state information, from a potential responder. Before participating in the sensing measurement process, the initiator may perform a procedure for obtaining link quality from a candidate responder. A sensing active mode based on information on a time and a location for switching to a sensing active mode or based on a specific pattern (e.g., a duty cycle) may be configured in a semi-static way or a dynamic way by RRC, MAC CE, or DCI.

### Sensing group configuration

A sensing initiator may transmit sensing group setup request information, and the sensing group setup request information may include a first sensing group setup ID. The sensing group setup ID may be jointly encoded with a part of the setup request information (e.g., a CRC scrambled by the sensing group setup ID). The sensing group setup request information may include a minimum number of responders. The minimum number of responders may be configured by RRC parameters (e.g., RRC common parameters or RRC UE-specific parameters). Thereafter, when a base station participates in a sensing measurement process as a responder, RRC UE-specific parameters for the base station (e.g., RRC responder/receiver parameters) may be used and/or interpreted. In this case, when a threshold indicating the minimum number of responders is not defined, the minimum number of responders may be regarded as 1 or a specific value. The sensing group configuration request information may include capability information required for a sensing responder. The required capability information may be configured by RRC parameters (e.g., RRC common parameters or RRC UE-specific parameters). The sensing group configuration request information may be maintained identically until a sensing group is terminated by a sensing initiator or a sensing responder. Parameters configured by RRC common parameters or RRC UE-specific parameters may be maintained identically until a sensing group is terminated by an initiator or a responder.

A sensing responder transmits sensing group configuration response information in response to sensing group configuration request information including a first sensing group configuration ID. The sensing group configuration response information may be transmitted through a first type of DCI format. The first sensing group configuration ID may be CRC-scrambled in the first type of DCI. The sensing group configuration response information may include information indicating a participation status of the responder. The participation status of the responder may include participation acceptance, participation rejection, or an adjustment status indicating that participation is possible under a specific condition. The sensing group configuration response information may be sensing group configuration-related information transmitted by a responder that is expected to withdraw from or terminate a participating sensing group. The sensing group configuration response information may be sensing group configuration-related information transferred by a responder that is expected to withdraw from or terminate a participating sensing group. When an adjustment status is received from a responder with a specific condition, the sensing initiator determines whether to accept the adjusted condition.

When necessary, a sensing initiator may check whether the number of sensing responders intending to participate in a sensing group is equal to or greater than a first threshold value. The first threshold value may be configured as a minimum number of responders. The first threshold value may be a fixed value or one of values of a pre-defined set. The pre-defined set may be differently configured based on an environment of interest for sensing or a sensing object. When there is no pre-defined threshold value for the minimum number of responders, the threshold value may be regarded as 1. As described above, when various values configured in a first duration are given, if the number of sensing responders is less than the first threshold value, the initiator waits until a longest value among the values within the first duration.

A sensing initiator transmits sensing group configuration completion information having a first sensing group configuration ID to one or more responders that have responded with acceptance or an adjustment status. When the number of responders is equal to or greater than a first threshold value, the sensing initiator selects responders to which the sensing group configuration completion information is to be transmitted.
- When negotiation for a corresponding link between an initiator and a responder is completed, the sensing group configuration completion information may be transmitted. In this case, the sensing group configuration completion information may be transmitted from the initiator or the responder.
- When all negotiations between an initiator and responders are completed, the sensing group configuration completion information may be transmitted. In this case, when all negotiations between the initiator and the responders are completed, the initiator may transmit the sensing group configuration completion information.
- Negotiation for sensing group configuration between an initiator and responders may be processed within a specific time interval. In this case, the specific time interval may be included in first sensing group configuration request information having the first configuration ID. The specific time interval may be configured by RRC common parameters or RRC UE-specific parameters. The sensing group configuration completion information shall be transmitted within the specific time interval.

An initiator finalizes a sensing group configuration procedure and proceeds to a next stage of a sensing measurement process together with responders that have completed the sensing group configuration procedure.
- For additional operations of sensing group configuration, the initiator may update responder-related information for a sensing group by using a first sensing group configuration ID. For any reason, one or more responders may join or withdraw from the sensing group. When the number of responders is equal to or greater than a first threshold value, all request-response-completion procedures as described above may not be repeatedly performed.
- For additional operations of sensing group configuration, sensing group configuration using a second sensing group configuration ID may be started before termination of a sensing group using the first sensing group configuration ID. In this case, one responder may participate in one or more sensing groups.
- When the number of responders is less than the first threshold value, the initiator proceeds with termination of sensing group configuration.

### Sensing measurement configuration setting

After successful sensing group configuration, sensing measurement configuration setting is performed. The sensing measurement configuration setting is started by transmitting sensing measurement configuration setting announcement information to users participating in a sensing group configured in a sensing group configuration stage through multicast or unicast.

The sensing measurement configuration setting announcement information may include a sensing group configuration ID. The sensing measurement configuration setting announcement information may include a first sensing measurement configuration setting ID. The first sensing measurement configuration setting ID may be jointly encoded with a part of the sensing measurement configuration setting announcement information (e.g., a CRC scrambled by the first sensing measurement configuration setting ID). When a sensing measurement configuration setting ID is allocated to a sensing group, the announcement information may be maintained identically until the corresponding sensing measurement configuration is terminated.

The sensing measurement configuration setting announcement information may include a type of sensing measurement data to be measured. The sensing measurement data may be channel state information such as average SNR-related information and channel quality-related information, precoding matrix-related information, layer-related information, and/or rank-related information. The type of sensing measurement data may be configured by RRC parameters (e.g., RRC common parameters or RRC UE-specific parameters). The type of sensing measurement data may be transmitted in a first type of DCI format. A first sensing measurement configuration setting ID may be CRC-scrambled in the first type of DCI. Different sensing measurement data or different sensing measurement data sets may be assigned different sensing measurement configuration setting IDs. For example, one sensing measurement configuration setting ID may be assigned to one sensing measurement data. For example, a sensing measurement configuration setting ID may be assigned as a group to one or more sensing measurement data. In addition, a sensing measurement data set may be differently configured according to a purpose. For example, in a case of sensing measurement configuration for sidelink, a subset of sensing measurement data assigned to downlink may be required.

The sensing measurement configuration setting announcement information may include information on a frequency at which sensing measurement data is generated. For example, a measurement interval for each sensing measurement data may be configured, and different sensing measurement data may be measured at different intervals.

The sensing measurement configuration setting announcement information may include a reporting frequency and/or content of sensing measurement data. For example, a reporting interval for each measurement data may be configured, and different sensing measurement data may be reported at different intervals. When sensing measurement data is reported, the sensing measurement data may be recently measured sensing measurement data. The reported sensing measurement data may include an average value of one or more sensing measurement data.

When receiving sensing measurement configuration setting announcement information, a responder that has participated in a sensing measurement process during sensing group configuration may transmit sensing measurement configuration setting completion information in response to the sensing measurement configuration setting announcement information.
- The initiator may check whether a responder has correctly received the corresponding sensing measurement configuration information. Transmission of sensing measurement configuration setting completion information by the responder means that parameters configured for sensing measurement configured by the initiator have been accepted by the responder.
- The sensing measurement configuration setting response information may include information indicating at least one of an acceptance status, a rejection status, or an adjustment status. The sensing measurement configuration setting response information may be transferred through a third type of DCI format. A first sensing measurement configuration setting ID may be CRC-scrambled in the third type of DCI format. The acceptance status indicates that parameters configured for sensing measurement configured by the initiator have been accepted, and the rejection status indicates that parameters configured for sensing measurement configured by the initiator have been rejected. In addition, the adjustment status indicates negotiation of parameters configured for sensing measurement configured by the initiator. Here, for better perception in a mobility situation, one or more parameters for sensing measurement may be proposed by the responder through the sensing measurement configuration setting response information.
- An initiator may transmit sensing measurement configuration setting completion information to one or more responders. For example, transmission of the sensing measurement configuration setting completion information to a responder in an acceptance status means that the initiator has confirmed that parameters configured for sensing measurement configured by the initiator have been accepted by the responder. As another example, transmission of the sensing measurement configuration setting completion information to a responder in an adjustment status means that the initiator has accepted parameters configured for sensing measurement configured by the responder. Alternatively, transmission of the sensing measurement configuration setting completion information to a responder in a rejection status means that the initiator has confirmed that the responder has rejected parameters configured for sensing measurement configured by the initiator and that the responder has not proposed configuration parameters. In order to save resource elements, the initiator may not transmit the sensing measurement configuration setting completion information to a responder in a rejection status.

Additional negotiation for configuring configuration parameters for sensing measurement between an initiator and a responder may be performed.
- The sensing measurement configuration setting completion information may be transmitted when negotiation for each corresponding link between the initiator and the responder is completed. The sensing measurement configuration setting completion information may be transmitted from the initiator or the responder.
- The sensing measurement configuration setting completion information may be transmitted when all negotiations between the initiator and the responder are completed. When all negotiations between the initiator and the responder are completed, the initiator may transmit the sensing measurement configuration setting completion information.

For additional operations of sensing measurement configuration setting, an initiator may update sensing measurement configuration-related information. Among one or more sensing measurement configurations for sensing measurement data, a measurement time interval may be updated to a new measurement time interval. In this case, remaining configurations for the sensing measurement data are maintained identically. Among one or more sensing measurement configurations for sensing measurement data, a reporting time interval may be updated to a new reporting time interval. In this case, remaining configurations for the sensing measurement data are maintained identically.

For additional operations of sensing measurement, sensing measurement configuration setting using a second sensing measurement configuration setting ID may be started before termination of sensing measurement using a first sensing measurement configuration setting ID. One responder may participate in one or more sensing measurement configuration settings.

### Sensing measurement data generation and report

After sensing measurement configuration setting is successfully performed, sensing measurement data generation and reporting are performed. Some steps of the sensing measurement process, that is, the sensing measurement data generation and reporting stage, may be repeatedly performed as illustrated in FIG. 7.

When sensing group configuration and sensing measurement configuration setting are completed, a transmitter transmits a sensing signal. In addition, two or more transmitters may transmit sensing signals. A receiver or an initiator may trigger one or more transmitters to transmit sensing signals. A receiver measures and reports sensing signals transmitted according to a configuration pre-configured during sensing measurement configuration setting.

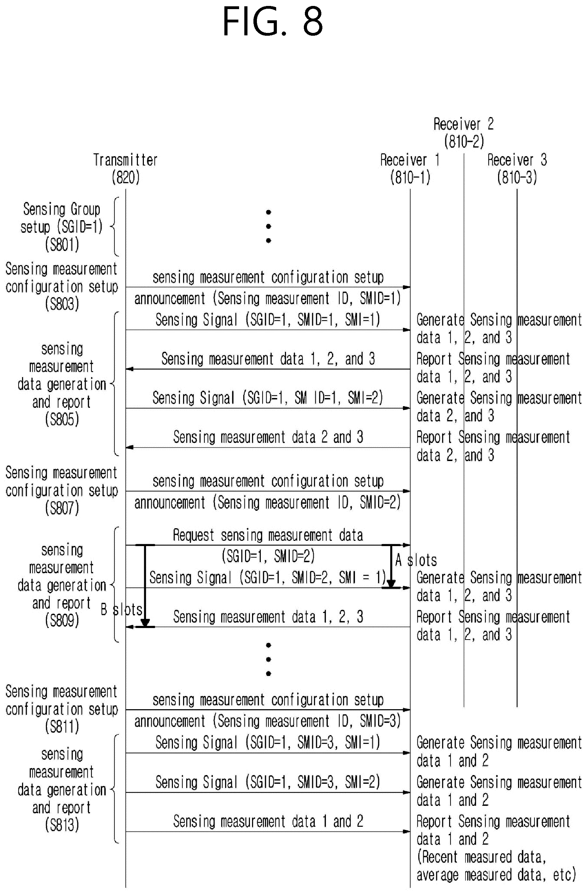

Exemplary signaling for sensing measurement configuration setting and sensing measurement data generation and reporting is illustrated in FIG. 8. FIG. 8 illustrates an example of a sensing measurement data generation and reporting procedure based on sensing measurement configuration setting applicable to the present disclosure. Each of a transmitter 820 and/or receivers 810-1, 810-2, and 810-3 illustrated in FIG. 8 may be a UE, a base station, or another network entity. For example, the transmitter 820 may be a base station, and the receivers 810-1, 810-2, and 810-3 may be UEs. The transmitter 820 may be an initiator, and the first receiver 810-1, the second receiver 810-2, and/or the third receiver 810-3 may be potential or determined responders. The transmitter 820 may perform a sensing group configuration stage S801 for configuring a sensing group with the first receiver 810-1. When sensing group configuration is completed, the transmitter 820 and the first receiver 810-1 participate in a sensing measurement process. That is, the transmitter 820 and the first receiver 810-1 may repeatedly perform sensing measurement configuration setting stages S803, S807, and S811, and sensing measurement data generation and reporting stages S805, S809, and S813. After sensing measurement data generation and reporting are successfully performed, sensing measurement configuration termination or sensing group termination may be performed. In general, termination may be explicitly or implicitly performed by an initiator or a responder.

### Sensing measurement configuration termination

Sensing measurement configuration termination may be performed in an implicit manner or an explicit manner. For example, sensing measurement configuration termination may be performed after a pre-defined duration to wait for expected information according to an implicit manner, or may be performed by first information indicating sensing measurement configuration termination according to an explicit manner. The first information may include at least one of a sensing measurement configuration setting ID or a sensing group configuration ID. In this case, the same sensing measurement configuration setting ID and different sensing group IDs may be assigned. Sensing measurement configuration may be simultaneously terminated for all participants participating in a sensing group by an initiator. An initiator may terminate one or more sensing measurement configurations for one or more specific responders. One or more responders may terminate their own sensing measurement configuration. The first information may include a sensing measurement configuration setting ID set to a specific value (e.g., F) to indicate termination of all sensing measurement configurations regardless of the sensing measurement configuration setting ID.

### Sensing group termination

Sensing group termination may be performed in an implicit manner or an explicit manner. For example, sensing group termination may be performed after a pre-defined duration to wait for expected information according to an implicit manner, or may be performed by first information indicating sensing group termination. The pre-defined duration may be configured by RRC common parameters or RRC UE-specific parameters. The first information may include a sensing group configuration ID. A sensing group may be simultaneously terminated for all participants by an initiator. An initiator may terminate one or more sensing groups for one or more specific responders. One or more responders may terminate their own sensing group. When a sensing group with a sensing group ID (SGID) set to A is terminated, a sensing measurement configuration with the SGID set to A is implicitly terminated. The first information may include a sensing group configuration ID configured to a specific value (e.g., F) to indicate termination of all sensing groups regardless of the corresponding sensing group configuration ID.

In 3GPP, Downlink Control Information (DCI) may transmit information such as Hybrid Automatic Repeat and Request (HARQ) information for uplink and downlink, physical layer resource allocation, and power control commands.
- Transmit of information for resource scheduling for PDSCH
- Transmit of information for resource scheduling for PUSCH
- Transmit of information for PUSCH and PUCCH power adjustment for UL power control

DCI is transmitted through PDCCH with a 24-bit CRC. In order to satisfy various requirements and conditions, multiple DCI formats are defined, and NR DCI formats may share the same DCI size for efficient implementation.

In 3GPP, a physical uplink control channel (PUCCH) is an uplink physical channel that transmit uplink control information (UCI). DCI is transferred through a physical downlink control channel (PDCCH), and UCI is transmitted through PUCCH. A major difference between DCI and UCI is that UCI may be transmitted through PUCCH or a PUSCH depending on a situation, whereas DCI may be transmitted only through PDCCH. DCI is not transmitted through a PDSCH in any case. UCI is reported to a network through uplink physical channels, namely PUCCH or PUSCH. UCI may include at least one of HARQ ACK/NACK, a scheduling request (SR), or CSI. For example, UCI may include only one of HARQ ACK/NACK, SR, or CSI depending on a situation, or may include at least two or more of HARQ ACK/NACK, SR, or CSI. HARQ ACK/NACK, SR, or CSI is not transmitted only through a single UCI. UCI is encoded and transmitted through PUCCH or is multiplexed through PUSCH. CSI report configuration may be performed aperiodically through PUSCH, periodically through PUCCH, or semi-persistently through PUCCH or DCI-activated PUSCH.

In the present disclosure, newly defined or modified information related to a sensing measurement process, for example, SGID, SMID, SMI, or sensing measurement data-related information, may be carried through PUCCH and/or PUSCH together with UCI as described above.

3GPP has not yet discussed how a sensing initiator configures a sensing group (e.g., a sensing group including responders) in a sensing system in order to start a sensing measurement process. Accordingly, the present disclosure proposes, as a method for configuring a sensing group in order to start a sensing measurement process, a method in which a base station, a network node, and/or a service provider pre-configures sensing groups, that is, a sensing group set. Specifically, the present disclosure proposes a method and a device in which a base station, a network node, and/or a service provider pre-configures a sensing group set, and a sensing initiator selects at least one sensing group within the pre-configured sensing group set to perform a sensing measurement process.

A pre-configured sensing group set may include N sensing groups. Each sensing group may include one or more initiators and/or one or more responders. When the sensing group set is pre-configured, an initiator does not need to perform an additional process for configuring a sensing group or for finding devices to be included in a sensing group in order to start a sensing measurement process. For example, an initiator may select at least one sensing group among the pre-configured sensing groups based on some criteria, conditions, or situations. Through such a method, a sensing measurement process may be performed simply and efficiently.

Each sensing group within a sensing group set may be assigned an index. For example, a first index may be assigned to a first sensing group, and a second index may be assigned to a second sensing group. The index assigned to each sensing group may be used as an ID of the sensing group. A sensing group to which an index is assigned may be notified to or exposed to an initiator and/or a responder when the sensing group set is configured. The sensing group set may be configured by RRC, and some parameters may need to be defined for a sensing measurement process.

According to prior art, a sensing initiator needs to request at least one other device (e.g., a responder) to configure a sensing group for the sensing initiator. In contrast, according to one embodiment of the present disclosure, a sensing initiator may participate in selected at least one sensing group by selecting at least one sensing group among sensing groups within a pre-configured sensing group set, without requesting at least one other device to configure a sensing group. Here, participating in a sensing group may include performing an authentication procedure at the sensing initiator.

In order for an initiator to dynamically indicate a sensing group, an existing or new type of DCI and/or UCI for a sensing measurement process may include an index of at least one sensing group among configured sensing group sets. In a multi-cell or multi-band, a dedicated type of DCI and/or UCI for a sensing measurement process may be used. Alternatively, for dynamic indication, a MAC CE may transfer an index of at least one sensing group among configured sensing group sets.

A pre-defined or configured sensing group set during a specific time point, a specific duration, or a time interval may be reconfigured for any reason. That is, a new sensing group set may be generated and configured. According to one embodiment, the sensing group set may be reconfigured based on RRC configuration parameters such as a specific duration. According to one embodiment, the sensing group set may be aperiodically reconfigured based on an event driven by a specific condition. Here, the event may be specified as a condition, and when the condition for the event is satisfied, a new sensing group set is configured. For example, the condition may be sensing performance degradation during a specific duration (e.g., a degradation ratio), a high ratio of the number of sensing groups having a size smaller than a first threshold value, or a case in which members of a current sensing group are evaluated as being outside a cell, outside a service area, or outside a service duration.

When information on a new sensing group set is received by a device belonging to a specific sensing group, a specific sensing group included in an outdated sensing group set may be terminated.

There are various options for generating a sensing group set. Here, the concept of a set is used by a device for association with at least one sensing group among sensing groups that already exist and are exposed to or identified by the device. The device uses the sensing group set in order to select a most suitable candidate sensing group for association, and the device may obtain sensing-related data or a sensing service through association with the selected sensing group.

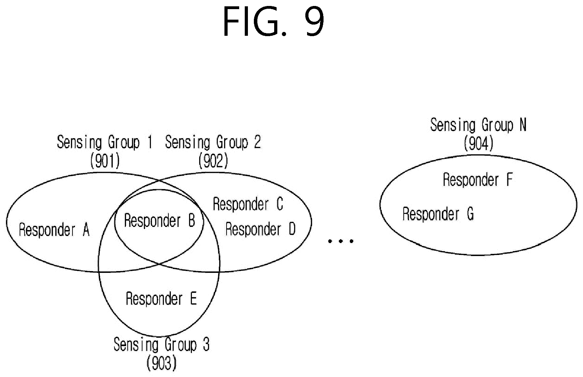

FIG. 9 illustrates an example of a sensing group set according to one embodiment of the present disclosure.

Referring to FIG. 9, a responder may belong to at least one sensing group among a plurality of sensing groups included in a sensing group set. That is, a device operating as a responder may be associated with at least one sensing group among a plurality of sensing groups. Here, the device may be a base station or a UE. For example, a sensing group set may include N sensing groups 901, 902, 903, and 904, and responder B may belong to sensing group 1 901, sensing group 2 902, and sensing group 3 903 among the N sensing groups. As an example, sensing group 1 901 may include responder A and responder B, and sensing group 2 902 may include responder B, responder C, and responder D. In addition, sensing group 3 903 may include responder B and responder E, and sensing group N 904 may include responder F and responder G. Such a configuration of sensing groups is merely an example for facilitating understanding, and the present disclosure is not limited thereto.

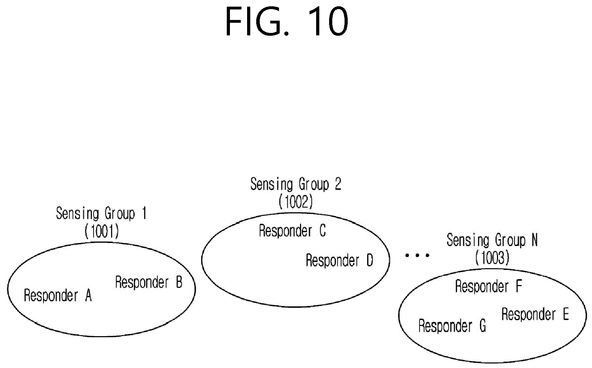

FIG. 10 illustrates another example of a sensing group set according to one embodiment of the present disclosure. Referring to FIG. 10, a responder may belong to only one sensing group among a plurality of sensing groups included in a sensing group set. That is, one responder may not be included in different sensing groups in an overlapping manner. In other words, when a first device operating as a responder belongs to one sensing group, the first device may not belong to another sensing group. Here, the first device may be a base station or a UE. For example, a sensing group set may include N sensing groups 1001, 1002, and 1003, and responders A and B may belong only to sensing group A 1001. As an example, sensing group 1 1001 may include responder A and responder B, and sensing group 2 1002 may include responder C and responder D. In addition, sensing group N 1003 may include responder E, responder F, and responder G. Such a configuration of sensing groups is merely an example for facilitating understanding, and the present disclosure is not limited thereto.

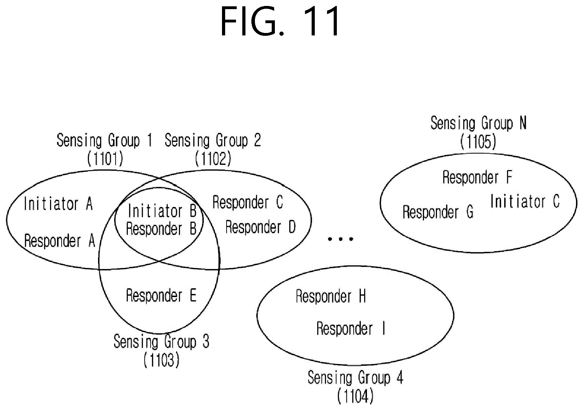

FIG. 11 illustrates another example of a sensing group set according to one embodiment of the present disclosure. Referring to FIG. 11, an initiator and/or a responder may belong to at least one sensing group among a plurality of sensing groups included in a sensing group set. For example, a sensing group set may include N sensing groups 1101, 1102, 1103, 1104, and 1105, and initiator B and responder B may belong to all of sensing group 1 1101, sensing group 2 1102, and sensing group 3 1103. As an example, sensing group 1 1101 may include initiator A, initiator B, responder A, and responder B, and sensing group 2 1102 may include initiator B, responder B, responder C, and responder D. In addition, sensing group 3 1103 may include initiator B, responder B, and responder E, sensing group 4 1104 may include responder H and responder I, and sensing group N 1105 may include initiator C, responder F, and responder G. Such a configuration of sensing groups is merely an example for facilitating understanding, and the present disclosure is not limited thereto.

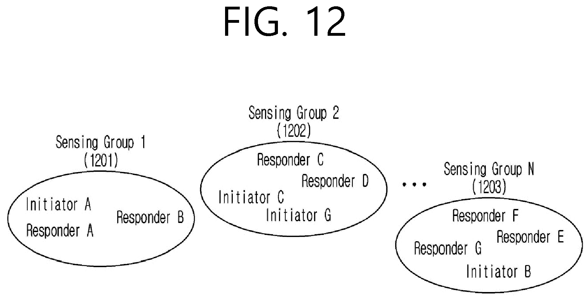

FIG. 12 illustrates another example of a sensing group set according to one embodiment of the present disclosure. Referring to FIG. 12, an initiator and/or a responder may belong to only one sensing group among a plurality of sensing groups included in a sensing group set. One initiator or one responder is not included in different sensing groups in an overlapping manner. As an example, a sensing group set may include N sensing groups 1201, 1202, and 1203, and initiator A and responder B may belong only to sensing group 1 1201. As an example, sensing group 1 1201 may include initiator A, responder A, and responder B, and sensing group 2 1202 may include initiator C, initiator G, responder C, and responder D. In addition, sensing group N 1203 may include initiator B, responder E, responder F, and responder G. Such a configuration of sensing groups is merely an example for facilitating understanding, and the present disclosure is not limited thereto.

As described with reference to FIG. 9 to 12, a network node for a sensing system and/or a sensing service pre-configures a sensing group set, and each device (e.g., a base station or a UE) having a function supporting a sensing measurement process may know at least one sensing group to which the device itself belongs. Each device may identify a sensing group to which the device belongs by obtaining information on at least one sensing group (e.g., a sensing group index) from the network node. For example, as illustrated in FIG. 9, responder B may know that responder B belongs to sensing group 1, sensing group 2, and sensing group 3. In addition, an initiator may recognize a size of each sensing group, a capability of a responder, and/or exposure information within a sensing group. The exposure information may include information on an exposure scenario distinguished according to an amount of exposed information and/or a type of exposed information. When the information described above is given from each sensing group, the initiator may select at least one sensing group for performing a sensing measurement process among at least one sensing group to which the initiator belongs based on the given information.

In the present disclosure, information on a sensing group of a UE and/or a base station may be exposed to a sensing initiator. In this case, information on the exposed sensing group may vary according to exposure scenario 1 or exposure scenario 2. In addition, members (e.g., responders) of each sensing group may vary based on the exposure information.

According to exposure scenario #1, existence of a sensing group may be exposed by exposing an index of each sensing group within a sensing group set. How a sensing system and/or a sensing service arranges members (e.g., responders) of each sensing group may vary depending on implementation. When selecting a sensing group, an initiator may have only limited information such as a size of each sensing group and may not have additional information.

In contrast, according to exposure scenario #2, additional information on each sensing group may be exposed. For example, according to exposure scenario #2, the exposure information may include information such as the number of members of a sensing group, geographic location/area information covered by the sensing group, target sensing service area information, moving target sensing service area information, and/or member information (e.g., subscriber information). According to exposure scenario #2, as described above, exposure of additional information on each sensing group may help an initiator select one or more sensing groups from a sensing group set.

In order to configure a sensing group based on exposure information, the following procedure may be performed.
1. A network node and/or a base station evaluates an intention/preference of each sensing group near a sensing initiator to be associated with the sensing initiator. The intention/preference may be evaluated based on the exposure information.
2. The network node and/or the base station transmits intention/preference information evaluated for each sensing group to the sensing initiator.
3. The sensing initiator selects at least one sensing group among a sensing group set based on the intention/preference information.

When selecting a sensing group, target sensing service area information and/or moving target sensing service area information may act as important information. However, target sensing service area information and/or moving target sensing service area information is not necessarily provided as exposure information. Accordingly, measures need to be prepared for such cases. For example, when a sensing group set is configured, at least one of target sensing service area information or moving target sensing service area information of each sensing group may need to be configured to be provided as exposure information.

Considering a sensing measurement process, a minimum number of responders for satisfying a specific condition during the sensing measurement process may be configured. The minimum number of responders may be referred to as a first threshold value. At least one sensing group (e.g., a sensing group set) that is pre-defined, configured, or indicated for a specific initiator or responder may exist. The present disclosure proposes several options for a sensing group selection procedure and corresponding signaling.

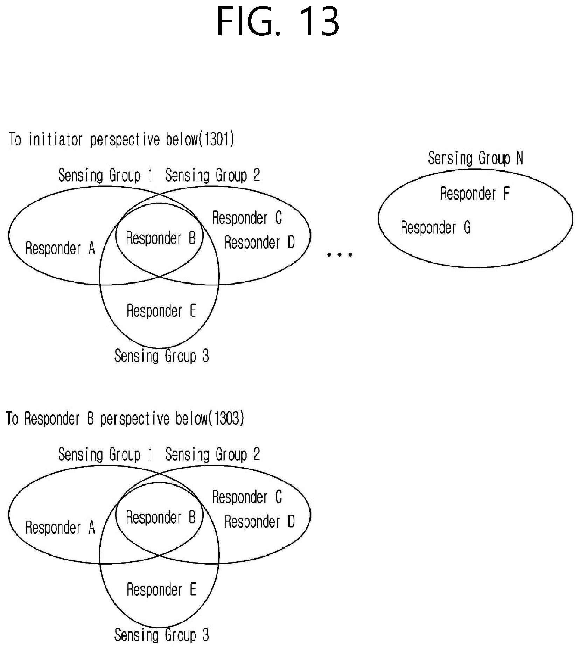

FIG. 13 illustrates an example of a sensing group set according to one embodiment of the present disclosure. Specifically, FIG. 13 illustrates a sensing group set 1301 from a perspective of an initiator and a sensing group set 1303 from a perspective of responder B. At least one of steps described with reference to FIG. 13 may not be performed, or an order of at least one step may be changed.

Referring to FIG. 13, each of a plurality of sensing groups included in a sensing group set may be configured to include at least one responder. In this case, the at least one responder may belong to at least one sensing group. In contrast, an initiator does not belong to any of the plurality of sensing groups included in the sensing group set. In this case, the initiator may select any sensing group within the sensing group set. However, since exposure information for the entire sensing group set should be provided to the initiator, relatively large resources are required. Alternatively, depending on a sensing system, only specific sensing groups may be provided to or exposed to the initiator so that the initiator may efficiently select an optimal sensing group based on a limited number of potential sensing groups and corresponding exposure information. From a responder perspective, responder B belongs to sensing group 1, sensing group 2, and sensing group 3, and exposure information for each sensing group may be provided. Alternatively, as a responder, only sensing group ID numbers may be provided without exposure information.

Step 1: A sensing group set is configured as illustrated in FIG. 13, and an index is assigned to each sensing group.

Step 2: An initiator performs an authentication procedure for selecting at least one sensing group.

Step 3: The initiator selects at least one sensing group among the sensing group set based on exposure information at various levels, and indicates so that potential responders within the selected sensing group may know a start of a sensing measurement process.
- An initiator may select one or more sensing groups having a size equal to or greater than a first threshold value.
- When the initiator determines that the number of responders that have reported sensing measurement data during a sensing measurement process is less than the first threshold value, the initiator may terminate the corresponding sensing group.

Step 4: When at least one of target sensing service area information or moving target sensing service area information does not exist in exposure information, target sensing service area information and/or moving target sensing service area information is generated as exposure information when a sensing group set is configured.

When a new initiator intends to participate in a sensing measurement process, the new initiator needs information on a configured sensing group set. The new initiator may wait in order to obtain the corresponding information that is periodically configured. Alternatively, the new initiator may transmit a request for information that triggers generation of the information to be configured.

When a new responder intends to participate in a sensing measurement process, the new responder needs to belong to a new sensing group set. The new responder may transmit a request to participate in one or more sensing groups within the new sensing group set. When the new sensing group set is configured, the new responder may be included as a member in one or more sensing groups having one or more indexes.

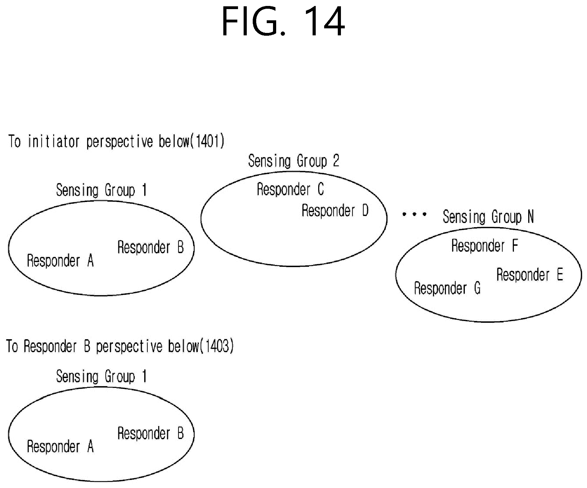

FIG. 14 illustrates another example of a sensing group set according to one embodiment of the present disclosure. Specifically, FIG. 14 illustrates a sensing group set 1401 from a perspective of an initiator and a sensing group set 1403 from a perspective of responder B. At least one of steps described with reference to FIG. 14 may not be performed, or an order of at least one step may be changed.

Referring to FIG. 14, each of a plurality of sensing groups included in a sensing group set is configured to include at least one responder. In this case, each responder may belong to only one sensing group. In contrast, an initiator does not belong to any sensing group among the plurality of sensing groups within the sensing group set. In this case, the initiator may select any sensing group among the plurality of sensing groups within the sensing group set. However, since exposure information for the entire sensing group set needs to be provided to the initiator, relatively large resources are required. Alternatively, depending on a sensing system, only specific sensing groups may be provided to or exposed to the initiator so that the initiator may efficiently select an optimal sensing group based on a limited number of potential sensing groups and corresponding exposure information. From a responder perspective, responder B may belong to only one sensing group (e.g., sensing group 1) among the sensing group set, and exposure information for the corresponding sensing group may be provided. Alternatively, a responder may need only a sensing group ID number without exposure information.

Step 1: A sensing group set is configured as illustrated in FIG. 14, and an index is assigned to each sensing group.

Step 2: An initiator performs an authentication procedure for selecting one sensing group.

Step 3: The initiator selects one sensing group among the sensing group set based on exposure information at various levels, and indicates so that potential responders within the selected sensing group may know a start of a sensing measurement process.
- The initiator may select one sensing group having a size equal to or greater than a first threshold value.
- When the initiator determines that the number of responders that have reported sensing measurement data during a sensing measurement process is less than the first threshold value, the initiator may terminate the corresponding sensing group.

Step 4: When at least one of target sensing service area information or moving target sensing service area information does not exist in exposure information, target sensing service area information and/or moving target sensing service area information is generated as exposure information when a sensing group set is configured.

When a new initiator intends to participate in a sensing measurement process, the new initiator needs information on a configured sensing group set. The new initiator may wait in order to obtain the corresponding information that is periodically configured. Alternatively, the new initiator may transmit a request for information that triggers an event to cause the information to be configured.

When a new responder intends to participate in a sensing measurement process, the new responder needs to belong to a new sensing group set. The new responder may transmit a request to participate in one sensing group within the new sensing group set. When the new sensing group set is configured, the new responder may be included as a member in one sensing group having one or more indices.

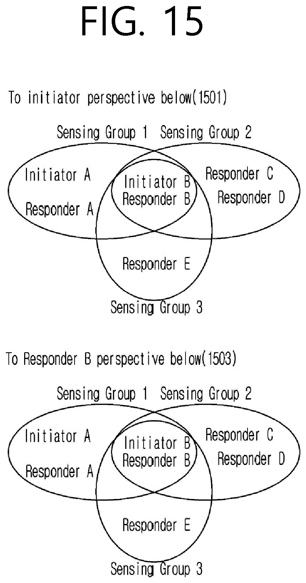

FIG. 15 illustrates another example of a sensing group set according to one embodiment of the present disclosure. Specifically, FIG. 15 illustrates a sensing group set 1501 from a perspective of initiator B and a sensing group set 1503 from a perspective of responder B. At least one of steps described with reference to FIG. 13 may not be performed, or an order of at least one step may be changed.

Referring to FIG. 15, each of a plurality of sensing groups included in a sensing group set may be configured to include at least one initiator and at least one responder. In this case, at least one initiator and/or at least one responder may belong to at least one sensing group. Accordingly, an initiator may belong to at least one sensing group among the plurality of sensing groups within the sensing group set. When a limited number of sensing groups is given to each initiator, the initiator may efficiently select an optimal sensing group based on the limited number of potential sensing groups and corresponding exposure information. For example, since initiator B belongs to sensing groups 1, 2, and 3, initiator B may select at least one sensing group among sensing groups 1, 2, and 3. From a responder perspective, a responder belongs to at least one sensing group within the sensing group set. For example, responder B belongs to sensing group 1, sensing group 2, and sensing group 3, and exposure information for each group may be exposed. Alternatively, as a responder, only sensing group ID numbers may be needed without exposure information.

Step 1: A sensing group set is configured as illustrated in FIG. 15, and an index is assigned to each sensing group.

Step 2: An initiator performs an authentication procedure for selecting at least one sensing group among sensing groups including the sensing initiator.

Step 3: The initiator selects one or more sensing groups among a sensing group set including the initiator based on exposure information at various levels.

Step 4: When at least one of target sensing service area information or moving target sensing service area information does not exist in exposure information, target sensing service area information and/or moving target sensing service area information is generated as exposure information when a sensing group set is configured.

Step 5: The initiator indicates so that potential responders within the selected sensing group may know a start of a sensing measurement process.
- An initiator may select one or more sensing groups having a size equal to or greater than a first threshold value.
- When the initiator determines that the number of responders that have reported sensing measurement data during a sensing measurement process is less than the first threshold value, the initiator may terminate the corresponding sensing group.

When a new initiator intends to participate in a sensing measurement process, the new initiator needs information on a configured sensing group set. The new initiator may transmit a request to participate in one or more sensing groups within the new sensing group set. When the new sensing group set is configured, the new initiator may be included as a member in one or more sensing groups having one or more indices.

When a new responder intends to participate in a sensing measurement process, the new responder needs to belong to a new sensing group set. The new responder may transmit a request to participate in one or more sensing groups within the new sensing group set. When the new sensing group set is configured, the new responder may be included as a member in one or more sensing groups having one or more indices.

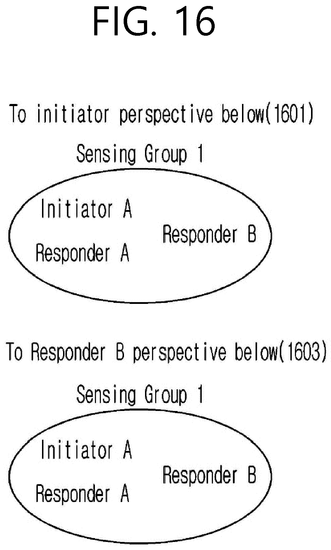

FIG. 16 illustrates another example of a sensing group set according to one embodiment of the present disclosure. Specifically, FIG. 16 illustrates a sensing group set 1601 from a perspective of initiator A and a sensing group set 1603 from a perspective of responder B. At least one of steps described with reference to FIG. 16 may not be performed, or an order of at least one step may be changed.

Referring to FIG. 16, each of a plurality of sensing groups included in a sensing group set may be configured to include at least one initiator and at least one responder. In this case, an initiator and/or a responder may belong to only one sensing group. Accordingly, an initiator may belong to only one sensing group among the sensing group set. When only one sensing group is given to each initiator, the initiator may efficiently select an optimal sensing group. When exposure information for one sensing group exists, an optimal sensing group may be selected based on the exposure information. From a responder perspective, a responder belongs to only one sensing group among the sensing group set. For example, responder B belongs only to sensing group 1, and exposure information for sensing group 1 may be exposed. Alternatively, as a responder, only a sensing group ID number may be needed without exposure information.

Step 1: A sensing group set is configured as illustrated in FIG. 16, and an index is assigned to each sensing group.

Step 2: An initiator selects one sensing group including the initiator based on exposure information at various levels.

Step 3: When at least one of target sensing service area information or moving target sensing service area information does not exist in exposure information, target sensing service area information and/or moving target sensing service area information is generated as exposure information when a sensing group set is configured.

Step 4: The initiator indicates so that potential responders within the selected sensing group may know a start of a sensing measurement process.
- The initiator may select one or more sensing groups having a size equal to or greater than a first threshold value.
- When the initiator determines that the number of responders that have reported sensing measurement data during a sensing measurement process is less than the first threshold value, the initiator may terminate the corresponding sensing group.

When a new initiator intends to participate in a sensing measurement process, the new initiator needs information on a configured sensing group set. The new initiator may transmit a request to participate in one or more sensing groups within the new sensing group set. When the new sensing group set is configured, the new initiator may be included as a member in one or more sensing groups having one or more indices.

When a new responder intends to participate in a sensing measurement process, the new responder needs to belong to a new sensing group set. The new responder may transmit a request to participate in one or more sensing groups within the new sensing group set. When the new sensing group set is configured, the new responder may be included as a member in one or more sensing groups having one or more indices.

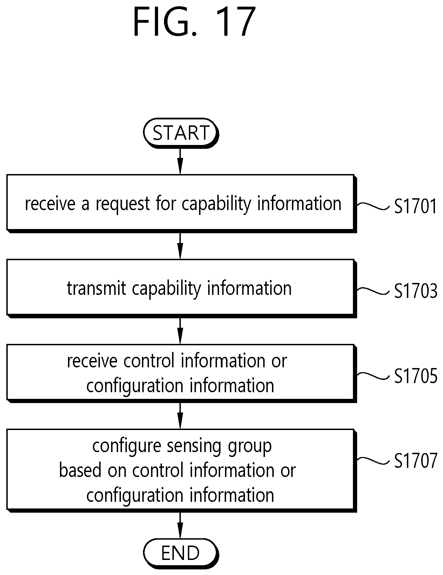

FIG. 17 illustrates an example of an information reception procedure for sensing measurement according to one embodiment of the present disclosure. FIG. 17 illustrates a method performed by a first device. The first device may be a UE.

Referring to FIG. 17, in step S1701, the first device receives a capability information request. The device may receive, from a second device, a message requesting transmission of capability information of the UE. The second device may be a base station or a network node.

In step S1703, the first device transmits capability information of the first device. The capability information may include capability information related to a sensing service. For example, the capability information related to the sensing service may include at least one of information indicating whether the first device supports the sensing service, computation capability information of the first device, or a type of raw data that may be processed by the first device.

In step S1705, the first device receives control information or configuration information. That is, the first device may receive, from the second device, control information or configuration information for a sensing service. The control information or the configuration information for the sensing service may include sensing-related information for at least one sensing group among a plurality of pre-configured sensing groups. For example, the control information or the configuration information may include only sensing-related information for at least one sensing group to which the first device belongs, or may include sensing-related information for all of the plurality of sensing groups. The sensing-related information may include at least one of identification information (e.g., an index or an ID) of a sensing group or exposure information of the sensing group. In this case, the exposure information may be differently configured according to an exposure scenario.

In step S1707, the first device configures a sensing group based on the control information or the configuration information. That is, the first device may select at least one sensing group for performing a sensing measurement process based on the control information or the configuration information, and may perform a sensing function with at least one other device included in the selected at least one sensing group. The first device may perform the sensing measurement process with at least one member within the sensing group by transmitting information indicating a start of the sensing measurement process to at least one member (e.g., a potential responder) within the selected at least one sensing group.

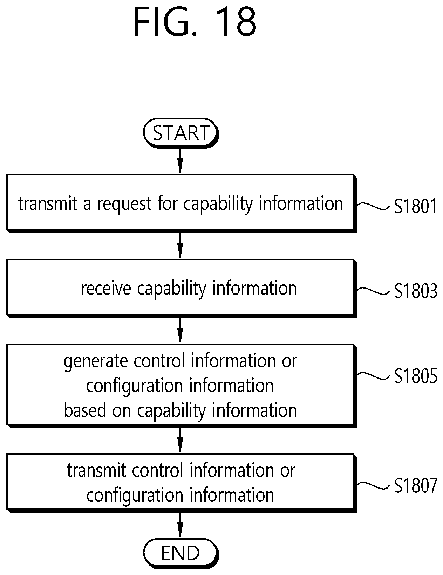

FIG. 18 illustrates an example of an information transmission procedure for sensing measurement according to one embodiment of the present disclosure. FIG. 18 illustrates a method performed by a second device. The second device may be a network node or a base station.

Referring to FIG. 18, in step S1801, the second device transmits a capability information request. The device may transmit, to a first device, a message requesting transmission of capability information.

In step S1803, the second device receives capability information. That is, the second device receives capability information of the first device. The capability information may include capability information related to a sensing service. For example, the capability information related to the sensing service may include at least one of information indicating whether the first device supports the sensing service, computation capability information of the first device, or a type of raw data that may be processed by the first device.

In step S1805, the second device generates control information or configuration information based on the capability information. That is, the second device may generate control information or configuration information for a sensing service based on capability information of the first device. Based on the capability information of the first device, the second device may configure a sensing group set as described with reference to FIG. 9 to 12, and may generate control information or configuration information including information on the configured sensing group set. The information on the sensing group set may include at least one of identification information (e.g., an index or a sensing group ID) of a sensing group to which the device belongs, exposure information of a sensing group to which the device belongs, exposure information of each of a plurality of sensing groups included in the sensing group set, a minimum number of responders for a sensing service, a duration for reconfiguration of the sensing group set, or a reconfiguration condition of the sensing group set. The exposure information of a sensing group may include at least one of an index of the sensing group, the number of members of the sensing group, geographic location information covered by the sensing group, geographic area information covered by the sensing group, target sensing service area information of the sensing group, moving target sensing service area information of the sensing group, or member information included in the sensing group. The exposure information may be differently configured according to an exposure scenario.

In step S1807, the second device transmits the control information or the configuration information. The second device may transmit the control information or the configuration information to the first device. The control information or the configuration information may be transmitted using RRC parameters, DCI, or MAC CE.

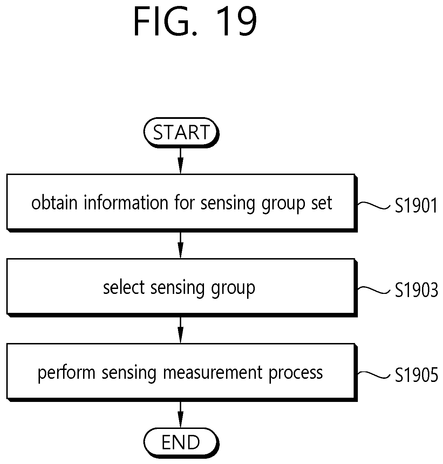

FIG. 19 illustrates an example of a sensing group configuration procedure according to one embodiment of the present disclosure. FIG. 19 illustrates a method performed by a first device. At least some operations of FIG. 19 may be understood as detailed operations of step S1705 and step S1707 of FIG. 17.

Referring to FIG. 19, in step S1901, the first device obtains information on a sensing group set. The first device may obtain the information on the sensing group set based on control information or configuration information received from a second device. The information on the sensing group set may include sensing-related information for at least one sensing group among a plurality of pre-configured sensing groups. For example, the information on the sensing group set may include only sensing-related information for at least one sensing group to which the first device belongs, or may include sensing-related information for all of the plurality of sensing groups. The sensing-related information may include at least one of identification information (e.g., an index or an ID) of a sensing group or exposure information of the sensing group. In this case, the exposure information may include at least one of an index, the number of members, covered geographic location information, covered geographic area information, target sensing service area information, moving target sensing service area information, or member information, according to an exposure scenario. According to one embodiment, the control information or the configuration information may further include at least one of a minimum number of responders for a sensing service, a duration for reconfiguration of the sensing group set, or a reconfiguration condition of the sensing group set.

In step S1903, the first device selects a sensing group. The first device may select at least one sensing group based on information on the sensing group set. As described with reference to FIG. 13 to 16, the first device may select at least one sensing group based on whether a sensing group to which the first device belongs exists. Whether the sensing group to which the first device belongs exists may be identified based on the information on the sensing group set. When a sensing group to which the first device belongs does not exist, the first device may select at least one sensing group among a plurality of sensing groups based on exposure information of each of the plurality of sensing groups within the sensing group set. In contrast, when at least one sensing group to which the first device belongs exists, the first device may select at least one sensing group among the sensing groups to which the first device belongs based on exposure information of the at least one sensing group to which the first device belongs. When selecting a sensing group, the first device may further consider a specified condition and may select at least one sensing group. For example, the first device may select at least one sensing group satisfying a minimum number of responders.

In step S1905, the first device performs a sensing measurement process. The first device may perform the sensing measurement process with at least one member within the selected at least one sensing group by transmitting information indicating a start of the sensing measurement process. The information indicating the start of the sensing measurement process may be unicasted or multicasted to at least one member within the selected at least one sensing group. The first device may transmit an index or an ID of the selected at least one sensing group together with the information indicating the start of the sensing measurement process. This is to allow other devices, which are members included in the selected at least one sensing group, to recognize that the sensing measurement process of the selected sensing group has started. Thereafter, the first device and the other devices that are at least one member included in the selected at least one sensing group may perform a sensing measurement configuration setting stage, a sensing measurement data generation and reporting stage, a sensing measurement configuration termination stage, and a sensing group termination stage described with reference to FIG. 7 and/or FIG. 8. Here, when the number of responders that report sensing measurement data is less than a minimum number of responders, the first device may terminate the corresponding sensing group.

Examples of the above-described proposed methods may be included as one of the implementation methods of the present disclosure and thus may be regarded as kinds of proposed methods. In addition, the above-described proposed methods may be independently implemented or some of the proposed methods may be combined (or merged). The rule may be defined such that the base station informs the UE of information on whether to apply the proposed methods (or information on the rules of the proposed methods) through a predefined signal (e.g., a physical layer signal or a higher layer signal).

Those skilled in the art will appreciate that the present disclosure may be carried out in other specific ways than those set forth herein without departing from the spirit and essential characteristics of the present disclosure. The above exemplary embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. Moreover, it will be apparent that some claims referring to specific claims may be combined with another claims referring to the other claims other than the specific claims to constitute the embodiment or add new claims by means of amendment after the application is filed.

### INDUSTRIAL APPLICABILITY

The embodiments of the present disclosure are applicable to various radio access systems. Examples of the various radio access systems include a 3rd generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

## Claims

1. A method performed by a first device in a wireless communication system comprising:
receiving, from a second device, a request for capability information;
transmitting, to the second device, the capability information of the first device;
receiving, from the second device, control information or configuration information; and
configuring at least one sensing group for a sensing service, based on the control information or the configuration information,
wherein the control information or the configuration information includes sensing-related information for the at least one sensing group among a plurality of sensing groups preconfigured.

2. The method of claim 1,
wherein the control information or the configuration information includes sensing-related information for each of the plurality of sensing groups or sensing-related information for at least some sensing groups including the at least one sensing group among the plurality of sensing groups, and
wherein the sensing-related information includes at least one of identification information of a sensing group or exposure information of a sensing group.

3. The method of claim 2,
wherein the exposure information of the sensing group includes at least one of an index, a number of members, covered geographic location information, covered geographic area information, target sensing service area information, moving target sensing service area information, or member information, based on an exposure scenario.

4. The method of claim 1,
the step of configuring the at least one sensing group comprising:
checking whether at least one sensing group to which the first device belongs exists, based on the control information or the configuration information; and
selecting the at least one sensing group, based on an existence of the at least one sensing group to which the first device belongs.

5. The method of claim 1,
the step of configuring the at least one sensing group comprising:
selecting at least one sensing group for the sensing service, based on the control information or the configuration information; and
transmitting, to at least one other device included in the selected at least one sensing group, information to indicate a start of a sensing measurement process.

6. The method of claim 5,
wherein the control information or the configuration information further includes a minimum number of respondents for the sensing service.

7. The method of claim 6,
the step of selecting the at least one sensing group comprising:
selecting at least one sensing group having a number of members greater than or equal to the minimum number of respondents.

8. The method of claim 7, further comprising:
receiving, from at least one other device included in the sensing group, sensing measurement data report;
comparing a number of the at least one other device that transmitted the sensing measurement data report with the minimum number of respondents; and
determining whether to end the at least one sensing group, based on a comparison result.

9. The method of claim 1,
wherein the control information or the configuration information further includes at least one of a period for reconfiguration or a reconfiguration condition, and
wherein the plurality of sensing groups preconfigured is reconfigured based on the at least one of the period for reconfiguration or the reconfiguration condition.

10. A method performed by a second device in a wireless communication system comprising:
transmitting, to a first device, a request for capability information;
receiving the capability information of the first device; and
transmitting, to the first device, control information or configuration information generated based on the capability information,
wherein the control information or the configuration information includes sensing-related information for the at least one sensing group among a plurality of sensing groups preconfigured.

11. The method of claim 10,
wherein the plurality of sensing groups is configured based on capability information of a plurality of devices, and
wherein each of the plurality of sensing group is configured to include at least one of at least one device to operate as a respondent of a sensing service among the plurality of devices or at least one device to operate as an initiator of the sensing service among the plurality of devices.

12. A first device in a wireless communication system comprising:
a transceiver; and
a processor connected to the transceiver,
wherein the processor is configured to:
receive, from a second device, a request for capability information;
transmit, to the second device, the capability information of the first device;
receive, from the second device, control information or configuration information; and
configure at least one sensing group for a sensing service, based on the control information or the configuration information,
wherein the control information or the configuration information includes sensing-related information for the at least one sensing group among a plurality of sensing groups preconfigured.

13. A second device in a wireless communication system comprising:
a transceiver; and
a processor connected to the transceiver,
wherein the processor is configured to:
transmit, to a first device, a request for capability information;
receive the capability information of the first device; and
transmit, to the first device, control information or configuration information generated based on the capability information,
wherein the control information or the configuration information includes sensing-related information for the at least one sensing group among a plurality of sensing groups preconfigured.

14. A communication device comprising:
at least one processor; and
at least one computer memory connected to the at least one processor and storing instructions that direct operations when executed by the at least one processor, the operations comprising:
receiving, from other device, a request for capability information;
transmitting, to the other device, the capability information;
receiving, from the other device, control information or configuration information; and
configuring at least one sensing group for a sensing service, based on the control information or the configuration information,
wherein the control information or the configuration information includes sensing-related information for the at least one sensing group among a plurality of sensing groups preconfigured.

15. A non-transitory computer-readable medium storing at least one instruction, the at least one instruction being executable by a processor, the at least one instruction causing a device to:
receive, from other device, a request for capability information;
transmit, to the other device, the capability information;
receive, from the other device, control information or configuration information; and
configure at least one sensing group for a sensing service, based on the control information or the configuration information,
wherein the control information or the configuration information includes sensing-related information for the at least one sensing group among a plurality of sensing groups preconfigured.
